# FASCICULE DE BREVET EUROPEEN

(11) **EP 1 190 963 B1**
(45) Date de publication et mention de la délivrance du brevet: **28.12.2005**
(21) Numéro de dépôt: 01402412.9
(22) Date de dépôt: 20.09.2001
(51) Int. Cl.: B65G 1/02, A47B 81/00

(54) **Bâti pour supporter des contenants de symétrie cylindrique**
Rahmen zur Lagerung von Behältern mit zylindrischer Symmetrie
Frame for supporting containers with cylindrical symmetry

(30) Priorité: 22.09.2000 FR 0012076
(43) Date de publication de la demande: 27.03.2002
(73) Titulaire: Tonnellerie Baron, 17100 Les Gonds (FR)
(72) Inventeur: Tombu, Nicolas, 17100 Les Gonds (FR)
(74) Mandataire: Dronne, Guy

(56) Documents cités:
- EP-A1- 0 953 305
- EP-A1- 1 028 073
- EP-A1- 1 036 525
- US-A- 4 431 107

## Description

La présente invention concerne un bâti pour supporter des contenants et plus particulièrement des fûts aptes à contenir des produits liquides.

Des types de fûts sont connus pour contenir et stocker les produits liquides. Ils présentent généralement une première portion de paroi de forme générale cylindrique fermée à chacune de ses deux extrémités par deux secondes portions de paroi identique circulaire formant fond, leur axe longitudinal coupant sensiblement perpendiculairement lesdites deux secondes portions de paroi. Des orifices de remplissage ou de vidange sont percés dans l'une des deux secondes portions de paroi formant fond et/ou dans la première portion de paroi, généralement dans sa partie médiane.

Il est connu de gerber les contenants de symétrie cylindrique ensemble selon un plan vertical de façon que leur axe longitudinal soit sensiblement perpendiculaire audit plan vertical et que leurs deux secondes portions coïncident entre elles pour former deux plans moyens verticaux parallèles entre eux.

Ainsi, des contenants sont alignés côte à côte pour former une première rangée sur laquelle une deuxième rangée est constituée de façon que chaque contenant de la deuxième rangée soit en appui sur deux contenants de la première rangée. De manière identique, des rangées supérieures sont constituées jusqu'à une limite où un seul contenant est susceptible d'être en appui sur deux contenants inférieurs. De la sorte, on obtient une structure générale pyramidale. Cependant, compte tenu de la taille des contenants gerbés, le nombre de rangées superposées est limité pour obtenir un ensemble stable.

Toutefois, ce type de stockage des contenants de symétrie cylindrique présente un inconvénient majeur lié au remplissage ou à la vidange desdits contenants lorsqu'ils sont gerbés. En effet, pour assurer la vidange la plus complète possible, le contenant qui est incliné de façon que son axe longitudinal soit horizontal, doit être orienté de manière que l'orifice, qui est percé excentré à la périphérie de l'une des deux secondes portions de paroi formant fond, soit situé au niveau le plus bas par rapport au volume interne du contenant. Or, lorsque les contenants sont en appui les uns sur les autres, il est impossible de les déplacer aisément pour ajuster l'orifice dans la position la plus basse ; et il est difficile d'obtenir précisément cette position lors de l'opération de gerbage si les contenants sont pleins.

Par ailleurs, il est également impossible de retirer un contenant d'une rangée inférieure sans retirer les contenants des rangées supérieures.

Dans le document EP 0 953 305, il est prévu une structure de support pour soutenir et gerber des tonneaux, au moyen de luges empilées les unes sur les autres en quinconce. Chaque luge permet de recevoir au moins trois tonneaux alignés les uns derrière les autres. En conséquence, il est impossible d'accéder isolément à chaque tonneau ou de déplacer l'un d'entre eux sans devoir en déplacer plusieurs autres.

L'invention vise à proposer un bâti pour supporter des contenants permettant de remédier aux inconvénients précités tout en conservant les avantages que procure le gerbage en terme d'occupation de l'espace.

Ce but est atteint avec le bâti conforme à l'invention selon la revendication 1.

Ainsi, une caractéristique de l'invention réside dans le mode de stockage des contenants qui sont gerbés selon un plan vertical, leur axe longitudinal étant sensiblement perpendiculaire audit plan vertical, mais chacun dans une structure modulaire et supporté par des moyens d'appui de façon indépendante. De la sorte, les contenants peuvent être insérés ou retirés de l'ensemble indépendamment les uns des autres.

De plus, les structures modulaires sont superposées de façon que les contenants soient disposés en quinconce, ce qui permet d'optimiser l'occupation de l'espace disponible.

En outre, selon une caractéristique avantageuse, chaque structure modulaire comprend :
- un élément de structure postérieur et un élément de structure antérieur en regard l'un de l'autre, chaque élément de structure étant constitué de deux arcs en regard l'un de l'autre, la ligne moyenne d'un arc étant sensiblement verticale de façon à présenter une extrémité supérieure et une extrémité inférieure, lesdits arcs étant reliés entre eux par un arc de liaison de façon que la concavité desdits deux arcs et de l'arc de liaison soit dirigée vers l'intérieur de ladite structure et que lesdits éléments de structure forment sensiblement une portion de cercle dont le diamètre est supérieur au diamètre maximal du fût ;
- des tiges de liaison aptes à relier lesdits éléments de structure postérieurs et lesdits éléments de structure antérieurs ;
et lesdites extrémités supérieures et inférieures desdits deux arcs desdits éléments de structure postérieur et antérieur respectivement contenus dans lesdits plans moyens verticaux postérieur et antérieur, constituent respectivement lesdits points de fixation supérieurs et lesdits points de fixation inférieurs de ladite structure modulaire.

Ainsi, la structure modulaire forme un berceau dans lequel un contenant est susceptible d'être inséré entre lesdits éléments de structure et posé sur lesdits moyens d'appui de façon que l'axe longitudinal du contenant soit sensiblement perpendiculaire au plan moyen postérieur et au plan moyen antérieur.

En outre, on comprend selon cette caractéristique avantageuse de l'invention, que les extrémités inférieures des éléments de structure d'une structure modulaire supérieure constituent quatre points de fixation inférieurs de ladite structure modulaire aptes à être reliés à quatre points de fixation constitués par les extrémités supérieures des arcs de deux structures modulaires inférieures contiguës. Ainsi, les deux structures modulaires inférieures sont reliées entre elles par la structure supérieure qui les chevauche. Cette configuration est reproductible autant de fois qu'on le souhaite pour constituer un bâti conforme à l'invention.

Les structures modulaires sont relativement simples à construire compte tenu de leurs éléments constitutifs et elles peuvent être assemblée selon le nombre de contenants à stocker.

Selon une autre caractéristique avantageuse, lesdits moyens d'appui sont constitués d'organes de roulement, chaque organe de roulement étant en rotation libre autour de la première extrémité d'un axe ;
et chaque extrémité inférieure des arcs desdits éléments de structure postérieur et antérieur comporte un organe de roulement relié à ladite extrémité inférieure par la seconde extrémité de l'axe dudit organe de roulement.

Ainsi, une autre caractéristique de l'invention réside dans mode d'appui des contenants qui permet de les actionner en rotation autour de leur axe longitudinal dans la structure modulaire avec un effort minimal même lorsque le contenant est plein. Cette disposition permet d'ajuster la position des orifices de vidange ou de remplissage sans avoir à désengager le contenant de son support. Chaque structure modulaire comporte quatre organes de roulement, chacun étant relié à l'extrémité inférieure d'un arc de façon que les quatre organes définissent sensiblement un parallélogramme rectangle horizontal. On comprend que les dimensions des côtés du parallélogramme doivent être inférieures aux dimensions des côtés du contour de la projection du contenant sur un plan tangent, pour que le contenant soit en appui sur les organes de roulement.

L'organe de roulement est monté en rotation libre autour de l'extrémité d'un axe qui est fixé à l'extrémité inférieure d'un arc de façon sensiblement perpendiculaire aux plans moyens verticaux. De la sorte, l'organe de roulement est libre en rotation dans un plan sensiblement parallèle aux plans moyens verticaux ce qui n'occasionne que très peu de frottement lors de la rotation du contenant.

Selon un mode préféré de mise en oeuvre de l'invention chaque élément de structure forme une seule et même pièce, lesdits deux arcs en regard et ledit arc de liaison étant constitués par une seule portion de cerceau présentant deux extrémités libres séparées par un espace. Ainsi, l'élément de structure est réalisé par cintrage d'une tige en forme de cerceau tronqué et constitue une seule pièce. Cette disposition permet de réaliser des éléments de structure à un coût avantageux.

Selon un autre mode préféré de mise en oeuvre de l'invention, l'élément de structure postérieur et l'élément de structure antérieur en regard sont reliés mécaniquement entre eux par des tiges de liaison sensiblement perpendiculaires audits plans moyens verticaux postérieur et antérieur de façon à constituer la structure modulaire rigide.

Selon un mode de réalisation de l'invention particulièrement avantageux, ladite seconde extrémité des axes desdits organes de roulement forme en outre des moyens de fixation aptes à relier les points de fixation supérieurs d'une structure modulaire et les points de fixation inférieurs d'une structure modulaire qui la surmonte. Ainsi, l'axe des organes de roulement présente deux fonctions ; l'une est de maintenir l'organe de roulement en position fixe par rapport à un élément de structure, l'autre est de solidariser ensemble deux structures modulaires superposées. De la sorte, l'affaiblissement de la structure modulaire que provoquerait le perçage de la tige cintrée pour fixer l'axe de l'organe de roulement est évité et le montage du bâti est simplifié.

De façon avantageuse, les extrémités libres desdits cerceaux constituent les points de fixation supérieurs de la structure modulaire par quoi ladite structure modulaire présente une portion d'espace dans sa partie supérieure apte à être traversée, au moins entre lesdites extrémités libres. Ainsi, puisque chacune des deux extrémités libres d'un cerceau inférieur est reliée à l'extrémité inférieure d'un cerceau supérieur, un espace libre est situé verticalement au-dessus de ladite portion d'espace entre les deux cerceaux supérieurs. De la sorte, comme on l'expliquera plus en détails dans la suite de la description, un outillage approprié est susceptible d'être inséré au-dessus du contenant pour le saisir à chaque extrémité, le soulevé et le retirer du châssis selon un axe perpendiculaire aux plans moyens verticaux, indépendamment des autres contenants.

Préférentiellement, la tige de liaison relie mécaniquement la partie supérieure de chaque arc de l'élément de structure postérieur à la partie supérieure de l'arc de l'élément de structure antérieur en regard. Cette configuration permet d'éviter le blocage en rotation des contenants lorsque ceux-ci présentent un bombement. En effet, dans ce cas, l'enveloppe définie par les deux cerceaux en regard l'un de l'autre est susceptible de couper une partie inférieure du contenant, définissant une surface d'intersection et la rotation du contenant est empêchée si une tige de liaison est contenue dans cette surface d'intersection ou la traverse.

Selon un mode particulier de réalisation le bâti comprend en outre des organes de liaison inférieurs aptes à relier deux structures modulaires contiguës inférieures et des organes de liaison supérieurs aptes à relier deux structures modulaires contiguës supérieures de façon qu'elles soient reliées ensemble respectivement dans leur partie inférieure ou dans leur partie supérieure. En effet, la première rangée de structures modulaires située au regard du sol ne présentant pas de structures modulaires inférieures pour les relier, on prévoit des organes de liaison inférieurs particuliers. Il en est de même pour la dernière rangée la plus haute du bâti pour laquelle on prévoit également des organes de liaison supérieurs particuliers.

Selon encore un mode particulier de réalisation les moyens d'appui sont constitués de portions d'axe, chaque extrémité inférieure des arcs desdits éléments de structure postérieur et antérieur comportant une portion d'axe apte à supporter un contenant en position fixe.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue de trois quarts du bâti éclaté, selon un mode particulier de réalisation de l'invention montrant les différents éléments qui le constitue ;
- la Figure 2, est une vue partielle de détail montrant un des éléments de l'invention référencé II sur la Figure 1 ; et,
- la Figure 3 est une vue de face montrant un bâti dans lequel sont stocké vingt-sept contenants sur six rangées superposées.

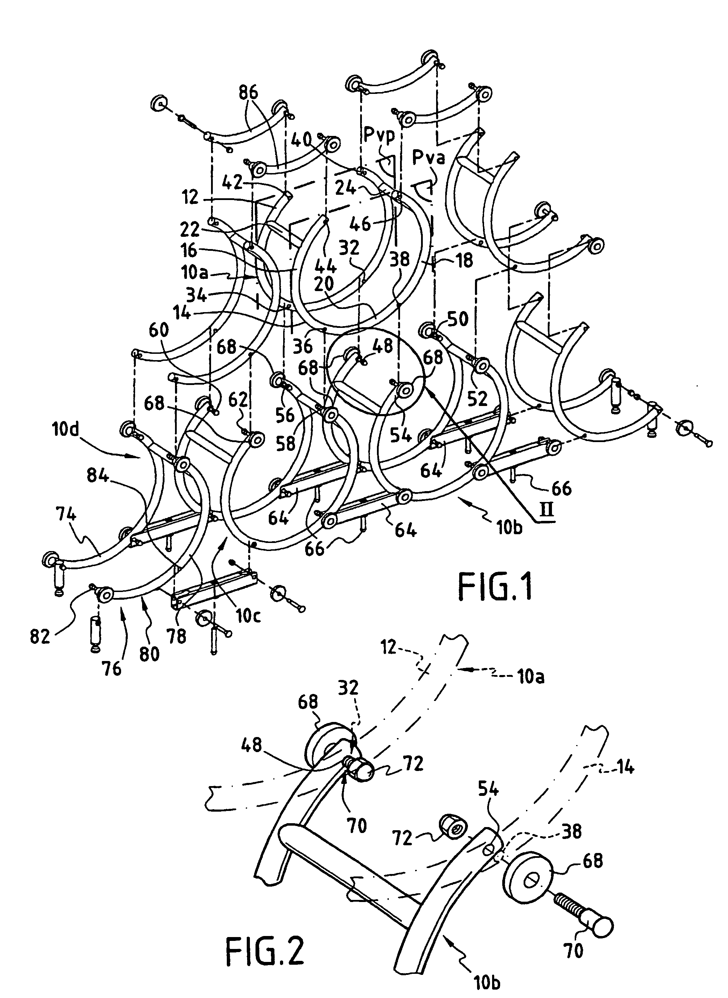

On se référera tout d'abord à la Figure 1 pour décrire, de façon générale, les éléments constitutifs de l'invention et leur mode d'agencement.

Le bâti conforme à l'invention comprend une pluralité de structures modulaires 10 identiques, reliées les unes aux autres à la fois selon un axe horizontal et un axe vertical.

Chaque structure modulaire 10 comprend deux éléments de structures identiques ; un élément de structure postérieur 12 et un élément de structure antérieur 14 en regard l'un de l'autre définissant respectivement un plan moyen vertical postérieur Pvp et un plan moyen vertical antérieur Pva, que l'on a représenté sur la Figure 1 pour la structure modulaire 10a, les deux plans Pvp et Pva étant sensiblement parallèles entre eux.

Chaque élément de structure comporte deux arcs verticaux identiques 16 et 18 en regard l'un de l'autre dont les extrémités inférieures sont reliées entre elles par un arc de liaison 20. La concavité des arcs 16, 18 et 20 est dirigée vers l'intérieur. Pour des raisons pratiques, les éléments de structure sont réalisés en une seule et même pièce formant une portion de cerceau par cintrage d'un profilé tubulaire.

Les éléments de structure 12 et 14 sont reliés mécaniquement entre eux, dans leur partie supérieure, par des tiges de liaison identique 22 et 24 de façon à obtenir une structure modulaire rigide. Les tiges de liaison 22, 24 peuvent être soudées à chacune de leurs extrémités sur les éléments de structure ou reliées auxdits éléments de structure par des moyens démontables.

En outre, la structure modulaire 10a comporte des points de fixation inférieurs 32, 34, 36, 38, correspondant aux extrémités inférieures des arcs verticaux 16, 18 et aux extrémités inférieures des arcs verticaux de l'élément de structure postérieur 12. La structure modulaire 10a comporte également des points de fixation supérieurs 40, 42, 44, 46, correspondant aux extrémités supérieures des arcs verticaux 16, 18 et aux extrémités supérieures des arcs verticaux de l'élément de structure postérieur 12.

Les points de fixation inférieurs 32, 34, 36, 38 et les points de fixation supérieurs 40, 42, 44, 46 sont constitués de perçages réalisés dans la structure modulaire perpendiculairement aux plans moyens verticaux Pvp et Pva de telle façon que les points de fixation inférieurs 32, 34, 36, 38 sont contenus dans un plan horizontal parallèle au plan défini par les points de fixation supérieurs 40, 42, 44, 46, et que ces derniers sont l'image respective des points de fixation inférieurs par une translation orthogonale dans le plan qu'ils définissent.

La structure modulaire 10a est représentée au-dessus de deux structures modulaires 10b et 10c contiguës sur lesquelles elle s'applique pour être fixée de façon à les chevaucher. Les deux structures modulaires 10b et 10c sont insérées dans la première rangée qui est disposée sur le sol, et la structure modulaire 10a qui les chevauche appartient à la seconde rangée.

Les structures modulaires 10b et 10c identiques à la structure modulaire 10a présentent également des points de fixation supérieurs respectivement 48, 50, 52, 54, et 56, 58, 60, 62. Ainsi, la structure modulaire 10a est fixée aux structures modulaires 10b et 10c de façon que les points de fixation inférieurs 32 et 38 de la structure 10a relient respectivement les points de fixation supérieurs 48 et 54 de la structure 10b et que les points de fixation inférieurs 34 et 36 relient les points de fixation supérieurs 56 et 58.

De la sorte, les structures modulaires 10b et 10c constituent un support pour la structure modulaire 10a et cette dernière constitue un moyen de liaison pour les structures 10b et 10c contiguës. En outre, les points de fixation inférieurs de ces dernières sont reliés deux à deux par des organes de liaison inférieurs 64 de manière à rendre rigide la liaison entre les deux structures 10b et 10c. Ces organes de liaison inférieurs 64, particuliers, sont destinés à relier la partie inférieure des structures modulaires de ladite première rangée disposée sur le sol.

Des tiges 66 formant pieds, fixées sous les organes de liaison inférieurs 64, maintiennent ces derniers en appui au-dessus du sol. Ainsi, le plan horizontal défini par les organes de liaison inférieurs 64 étant situé au-dessous des arcs de liaison des éléments de structure postérieurs et antérieurs des structures modulaires de ladite première rangée, lesdits arcs de liaison ne sont pas en contact avec le sol.

Les structures modulaires 10 sont destinées à recevoir des contenants, notamment pour les stocker, et elles comportent à cet effet des moyens d'appui.

Une caractéristique de l'invention réside dans le fait que les moyens d'appui comprennent des organes de roulement 68 identiques situés aux extrémités inférieures de chaque structure modulaire 10. Pour des raisons évidentes de clarté, seuls les organes de roulement 68 de la structure modulaire 10a sont référencés sur la Figure 1.

Une autre caractéristique avantageuse de l'invention réside dans le mode de fixation des structures modulaires 10 entre elles qui permet également de maintenir l'organe de roulement 68.

On se référera à la Figure 2 pour décrire plus en détails les éléments constitutifs de ce mode de fixation.

On retrouve sur la Figure 2 une portion de la structure modulaire 10a et une portion de la structure modulaire 10b, ainsi que les organes de roulement 68. On retrouve également les points de fixation inférieurs 32 et 38 de la structure modulaire 10a et les points de fixation supérieurs 48 et 54 de la structure modulaire 10b constitués de perçages.

Les structures modulaires 10a et 10b sont disposées de façon que les perçages des deux éléments de structure en regard 12 et 14 coïncident avec les perçages des deux éléments de structure de la structure modulaire 10b. Avantageusement, les éléments de structure de toutes les structures modulaires 10 présentent le même écartement, par conséquent, les structures modulaires 10a et 10b peuvent être ajustées de façon que la paroi postérieure de la structure modulaire 10a s'applique sur la paroi postérieure de la structure modulaire 10b. Un axe 70, présentant une première extrémité sur laquelle est monté à rotation l'organe de roulement 68, traverse les deux perçages en coïncidence et est bloqué par un écrou 72 vissé dans sa deuxième extrémité. Bien évidemment l'axe 70 présente un épaulement dans sa partie centrale apte à former étau avec l'écrou 72 de blocage pour ne pas gêner la rotation de l'organe de roulement 68.

Par ailleurs, la mise en oeuvre du bâti conforme à l'invention nécessite que le diamètre des organes de roulement 68 soit supérieur à l'épaisseur des arcs de façon qu'une portion de l'enveloppe définie par deux organes de roulement sensiblement coaxiaux d'un élément modulaire 10 ne soit pas coupées par lesdits arcs.

La description de l'agencement de ces deux portions peut être généralisée pour tous les points de fixation du bâti.

Compte tenu de la géométrie des structures modulaires 10 présentant deux portions de cerceaux tronqués en regard, les contenants de symétrie cylindrique seront introduits dans leur structure modulaire de façon que l'axe longitudinal de chaque contenant soit perpendiculaire aux plans moyens verticaux postérieurs et antérieurs desdites structures modulaires. Bien évidemment, le diamètre maximal des contenants doit être inférieur au diamètre des cerceaux tronqués pour pouvoir être insérés et appuyés sur les organes de roulement.

Les organes de roulement faisant saillie à l'intérieur des cerceaux, les contenants en appui sur quatre organes de roulement d'une structure modulaire peuvent être entraînés en rotation autour de leur axe longitudinal sans contact avec les cerceaux.

Avantageusement, on prévoit en outre des structures modulaires particulières pour les extrémités des rangées. En effet, les contenants d'une rangée supérieure étant situés entre deux contenants de la rangée immédiatement inférieure, chaque rangée supérieure comporte un contenant de moins qu'une rangée inférieure.

En se référant à la Figure 1, on décrira une structure modulaire particulière d'extrémité.

La structure modulaire 10d comporte également deux éléments de structure postérieur 74 et antérieur 76 en regard l'un de l'autre situés respectivement dans le prolongement des plans moyens verticaux postérieur et antérieur des éléments de structure de la structure modulaire 10c qu'elle prolonge.

En revanche, chaque élément de structure est constitué d'un seul arc vertical 78 contigu à l'arc vertical de la structure modulaire 10c, prolongé par un arc de liaison 80. Cet élément de structure est réalisé d'une seule pièce en arc de cercle.

Les deux extrémités 82 et 84 de l'arc de liaison 80 constituent les points de fixation inférieurs sur lesquels les organes de roulement 68 sont montés, et l'extrémité supérieure de l'arc vertical constitue le point de fixation supérieur de la structure modulaire 10d sur laquelle un organe de roulement 68 est également monté de manière à constitué avec l'organe de roulement 68 de la structure modulaire contiguë 10c des moyens d'appui.

En outre, on prévoit également des organes de liaison supérieurs 86 particuliers, constituant des structures modulaires particulières et comportant des éléments de structure composés d'un seul arc de liaison apte à relier deux structures modulaires contiguës inférieures. Chacune des extrémités d'un organe de liaison supérieur 86 comporte un organe de roulement de façon à disposer un contenant sur les organes de liaison 86.

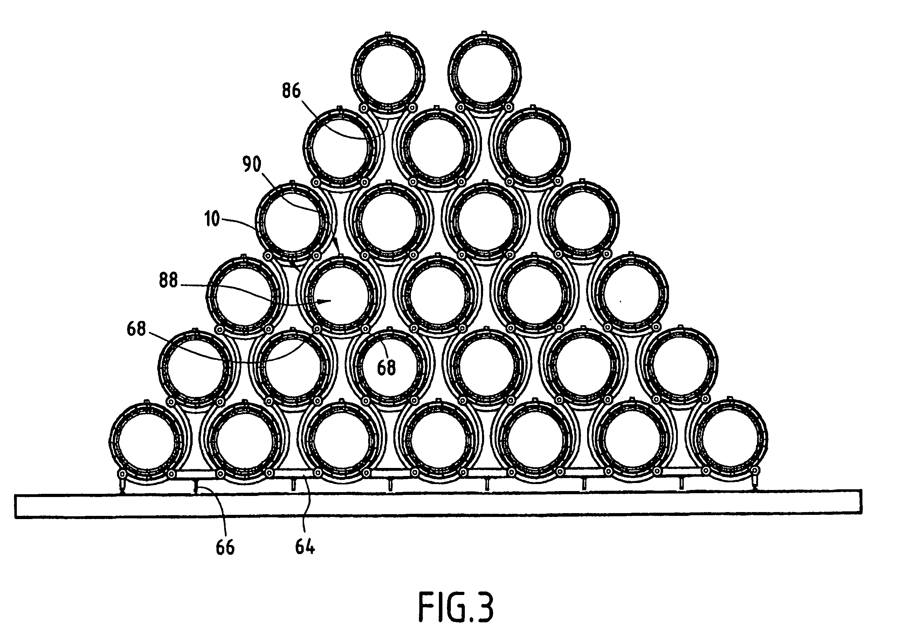

On se référera à la Figure 3 pour décrire un mode particulier de réalisation du bâti selon l'invention dans lequel vingt-sept contenants sont gerbés.

On retrouve sur la Figure 3 les structures modulaires 10 identiques dans lesquelles des contenants 88 sont insérés. Les contenants 88 sont en appui sur les organes de roulement 68 et sont susceptibles d'être entraînés en rotation afin d'ajuster la position des orifices de remplissage ou de vidange.

On comprend que la disposition particulière des contenants que permet le bâti conforme à l'invention, présente un avantage pour accéder à la partie supérieure des contenants 88 et notamment à leur orifice de remplissage 90 situé entre deux contenants supérieurs contigus.

En outre, l'espace situé entre deux contenants d'une rangée supérieure à l'aplomb du contenant d'une rangée inférieure est disponible pour insérer un outil apte à saisir les extrémités du contenant inférieur et à le retirer.

Il va de soi que ce mode de réalisation particulier n'est nullement limitatif et que l'on ne sortirait pas du cadre de l'invention en réalisant un bâti destiné à gerber des contenants selon un plan vertical comportant plus de vingt-sept contenants ou moins de vingt-sept contenants selon une autre géométrie.

Selon un mode particulier de mise en oeuvre de l'invention non représenté, les moyens d'appui sont constitués d'axes fixes aptes à relier les points de fixation des structures modulaires.

## Revendications

1. Bâti pour supporter de façon indépendante des contenants du type fût présentant un axe longitudinal comprenant,
- une pluralité de structures modulaires (10) apte à recevoir plusieurs contenants (88), chaque structure modulaire (10) présentant un plan moyen vertical postérieur (Pvp) sensiblement parallèle à un plan moyen vertical antérieur (Pva) et comportant, afin de relier entre elles lesdites structures modulaires, des points de fixation supérieurs (40, 42, 44, 46) et des points de fixation inférieurs (32, 34, 36, 38) et comportant, afin de supporter lesdits contenants, des moyens d'appui (68, 70, 72)situés à proximité desdits points de fixation inférieurs (32, 34, 36, 38) et éventuellement des points de fixation supérieurs (40, 42, 44, 46);
lesdites structures modulaires (10) étant reliées entre elles par leurs points de fixation (32, 34, 36, 38, 48, 54 56, 58) selon un axe horizontal et selon un axe vertical de façon que les plans moyens verticaux antérieurs (Pva) et les plans moyens verticaux postérieurs (Pvp) desdites structures modulaires (10) coïncident et de façon que toute structure modulaire supérieure chevauche deux structures modulaires inférieures en étant reliée par ses points de fixation inférieurs (32, 34, 36, 38) aux points de fixation supérieurs (40, 42, 44, 46) des deux structures modulaires inférieures contigües, cette liaison créant le bâti, par quoi lesdits contenants (88) sont aptes à être disposés en quinconce selon un plan vertical permettant un accès libre à la partie supérieure dudit contenant (88),
**caractérisé en ce que** lesdites structures modulaires (10) sont aptes à recevoir un à un lesdits contenants (88) et **en ce que** lesdits moyens d'appui (68, 70, 72) sont sensiblement compris dans un plan horizontal de façon à supporter un contenant (88) dont l'axe longitudinal est sensiblement perpendiculaire auxdits plans moyens verticaux postérieurs et antérieur (Pvp, Pva).

2. Bâti pour supporter des contenants selon la revendication 1, **caractérisé en ce que** chaque structure modulaire (10) comprend :
- un élément de structure postérieur (12) et un élément de structure antérieur (14) en regard l'un de l'autre, chaque élément de structure comprenant deux arcs (16, 18) en regard l'un de l'autre, la ligne moyenne d'un arc étant sensiblement verticale de façon à présenter une extrémité supérieure et une extrémité inférieure.

3. Bâti pour supporter des contenants selon la revendication 2,
**caractérisé en ce que**, lesdits arcs (16, 18) sont reliés entre eux par un arc de liaison (20) de façon que la concavité desdits deux arcs (16, 18) et de l'arc de liaison (20) soit dirigée vers l'intérieur de ladite structure et que lesdits éléments de structure (12, 14) forment sensiblement une portion de cercle dont le diamètre est supérieur au diamètre maximal du fût

4. Bâti pour supporter des contenants selon l'une quelconque des revendications 2 et 3,
**caractérisé en ce que** chaque structure modulaire (10) comprend :
- des tiges de liaison (22, 24) aptes à relier ledit élément de structure postérieur (12) et ledit élément de structure antérieur (14) ;

5. Bâti pour supporter des contenants selon l'une quelconque des revendications 2 à 4,
**caractérisé en ce que** lesdites extrémités supérieures et inférieures desdits deux arcs desdits éléments de structure postérieur (12) et antérieur (14) respectivement contenus dans lesdits plans moyens verticaux postérieur (Pvp) et antérieur (Pva), constituent respectivement lesdits points de fixation supérieurs (40, 42, 44, 46) et lesdits points de fixation inférieurs (32, 34, 36, 38) de ladite structure modulaire.

6. Bâti pour supporter des contenants selon l'une quelconque des revendications 1 à 5,
**caractérisé en ce que** lesdits moyens d'appui (68, 70, 72) sont constitués d'organes de roulement (68), chaque organe de roulement (68) étant en rotation libre autour de la première extrémité d'un axe (70).

7. Bâti pour supporter des contenants selon la revendication 6,
**caractérisé en ce que** chacun des arcs desdits éléments de structure (12, 14) postérieur et antérieur présente une extrémité qui comporte un organe de roulement (68) relié à ladite extrémité de l'arc par la seconde extrémité de l'axe (70) desdits moyens d'appui (68, 70, 72).

8. Bâti pour supporter des contenants selon la revendication 3, **caractérisé en ce que** chaque élément de structure postérieur ou antérieur (12, 14) forme une seule et même pièce, lesdits deux arcs en regard (16, 18) et ledit arc de liaison (20) étant constitués par une seule portion de cerceau présentant deux extrémités libres séparées par un espace.

9. Bâti pour supporter des contenants selon l'une quelconque des revendications 2 à 5 et 8, **caractérisé en ce que** l'élément de structure postérieur (12) et l'élément de structure antérieur (14) en regard sont reliés mécaniquement entre eux par des tiges de liaison (22, 24) sensiblement perpendiculaires audits plans moyens verticaux postérieur (Pvp) et antérieur (Pva).

10. Bâti pour supporter des contenants selon la revendication 7, **caractérisé en ce que** ladite seconde extrémité des axes (70) desdits organes de roulement (68) forme en outre des moyens de fixation aptes à relier les points de fixation supérieurs (48, 54) d'une structure modulaire (10b) et les points de fixation inférieurs (32, 38) d'une structure modulaire (10a) qui la surmonte.

11. Bâti pour supporter des contenants selon la revendication 8, **caractérisé en ce que** lesdites extrémités libres desdits cerceaux constituent les points de fixation supérieur (40, 42, 44, 46) de la structure modulaire (10a) par quoi ladite structure modulaire (10a) présente une portion d'espace dans sa partie supérieure apte à être traversée, au moins entre lesdites extrémités libres.

12. Bâti pour supporter des contenants selon la revendication 9, **caractérisé en ce que** la tige de liaison (22, 24) relie mécaniquement la partie supérieure de chaque arc de l'élément de structure postérieur (12) à la partie supérieure de l'arc de l'élément de structure antérieur (14) en regard.

13. Bâti pour supporter des contenants selon l'une quelconque des revendications 1 à 12, **caractérisé en ce qu'**il comprend en outre des organes de liaison inférieurs (64) aptes à relier deux structures modulaires contiguës inférieures (10c, 10b).

14. Bâti pour supporter des contenants selon l'une quelconque des revendications 1 à 13, **caractérisé en ce qu'**il comprend en outre et des organes de liaison supérieurs (86) aptes à relier deux structures modulaires contiguës supérieures.

15. Bâti pour supporter des contenants selon la revendication 2, **caractérisé en ce que** lesdits moyens d'appui sont constitués de portions d'axe, chaque extrémité inférieure des arcs desdits éléments de structure postérieur (12) et antérieur (14) comportant une portion d'axe.

## Patentansprüche

1. Gestell zum unabhängigen Tragen von Behältern vom eine Längsachse aufweisenden Typ Faß,
umfassend eine Vielzahl von modularen Strukturen (10), dazu ausgebildet, mehrere Behälter (88) aufzunehmen, wobei jede modulare Struktur (10) eine hintere vertikale mittlere Ebene (Pvp) aufweist, die im wesentlichen parallel zu einer vorderen vertikalen mittleren Ebene (Pva) ist, und
umfassend obere Befestigungspunkte (40, 42, 44, 46) und untere Befestigungspunkte (32, 34, 36, 38), um die modularen Strukturen untereinander zu verbinden, und
umfassend, um die Behälter zu tragen, Haltemittel (68, 70, 72), die in der Nähe der unteren Befestigungspunkte (32, 34, 36, 38) in einer oberen Reihe und der oberen Befestigungspunkte (40, 42, 44, 46) in einer unteren Reihe angeordnet sind,
wobei die modularen Strukturen (10) untereinander durch deren Befestigungspunkte (32, 34, 36, 38, 48, 54, 56, 58) gemäß einer horizontalen Achse und gemäß einer vertikalen Achse derart verbunden sind, daß die vorderen vertikalen mittleren Ebenen (Pva) und die hinteren vertikalen mittleren Ebenen (Pvp) der modularen Strukturen (10) übereinstimmen und daß die gesamte obere modulare Struktur zwei untere modulare Strukturen überschneidet, indem sie durch ihre unteren Befestigungspunkte (32, 34, 36, 38) mit den oberen Befestigungspunkten (40, 42, 44, 46) der beiden angrenzenden unteren Strukturen verbunden ist, wobei diese Verbindung das Gestell erzeugt, wodurch die Behälter (88) geeignet sind, wechselständig gemäß einer Vertikalebene angeordnet zu werden, was einen freien Zugang zum oberen Teil des Behälters (88) erlaubt,
**dadurch gekennzeichnet,**
**daß** die modularen Strukturen (10) geeignet sind, jeden Behälter (88) einzeln aufzunehmen und
**daß** die Haltemittel (68, 70, 72) im wesentlichen in einer Horizontalebene derart liegen, daß ein Behälter (88) getragen wird, dessen Längsachse im wesentlichen senkrecht zu den vorderen und hinteren vertikalen mittleren Ebenen (Pvp, Pva) ist.

2. Gestell zum Tragen von Behältern nach Anspruch 1, **dadurch gekennzeichnet, daß** jede modulare Struktur (10) umfaßt:
ein hinteres Strukturelement (12) und ein vorderes Strukturelement (14), die einander gegenüberstehen, wobei jedes Strukturelement zwei Bögen (16, 18) umfaßt, die einander gegenüberstehen, wobei die Durchschnittslinie eines Bogens im wesentlichen derart vertikal steht, daß ein oberes Ende und ein unteres Ende aufgewiesen wird.

3. Gestell zum Tragen von Behältern nach Anspruch 2, **dadurch gekennzeichnet, daß** die Bögen (16, 18) untereinander durch einen Verbindungsbogen (20) derart verbunden sind, daß die Konkavität der beiden Bögen (16, 18) und des Verbindungsbogens (20) zum Inneren der Struktur hin gerichtet ist und daß die Strukturelemente (12, 14) im wesentlichen einen Kreisteil bilden, dessen Durchmesser größer als der Maximaldurchmesser des Zylinders ist.

4. Gestell zum Tragen von Behältern nach einem der Ansprüche 2 und 3, **dadurch gekennzeichnet, daß** jede modulare Struktur (10) umfaßt:
Verbindungsstangen (22, 24), die geeignet sind, das hintere Strukturelement (12) und das vordere Strukturelement (14) zu verbinden.

5. Gestell zum Tragen von Behältern nach einem der Ansprüche 2 bis 4, **dadurch gekennzeichnet, daß** die oberen und unteren Enden der beiden Bögen der hinteren (12) und vorderen (14) Strukturelemente, die jeweils in den hinteren (Pvp) und vorderen (Pva) vertikalen mittleren Ebenen enthalten sind, jeweils die oberen Befestigungspunkte (40, 42, 44, 46) und die unteren Befestigungspunkte (32, 34, 36, 38) der modularen Struktur bilden.

6. Gestell zum Tragen von Behältern nach einem der Ansprüche 1 bis 5, **dadurch gekennzeichnet, daß** die Haltemittel (68, 70, 72) aus Rollelementen (68) bestehen, wobei jedes Rollelement (68) rotationsfrei um das erste Ende einer Achse (70) ist.

7. Gestell zum Tragen von Behältern nach Anspruch 6, **dadurch gekennzeichnet, daß** jeder der Bögen der hinteren und vorderen Strukturelemente (12, 14) ein Ende aufweist, das ein Rollelement (68) umfaßt, das mit dem Ende des Bogens durch das zweite Ende der Achse (70) der Haltemittel (68, 70, 72) verbunden ist.

8. Gestell zum Tragen von Behältern nach Anspruch 3, **dadurch gekennzeichnet, daß** das hintere oder vordere Strukturelement (12, 14) ein einziges gleiches Teil bildet, wobei die beiden gegenüberstehenden Bögen (16, 18) und der Verbindungsbogen (20) aus einem einzigen Ringteil bestehen, das zwei freie Enden aufweist, die durch einen Zwischenraum beabstandet sind.

9. Gestell zum Tragen von Behältern nach einem der Ansprüche 2 bis 5 und 8, **dadurch gekennzeichnet, daß** das hintere Strukturelement (12) und das vordere Strukturelement (14), die gegenüberstehen, mechanisch untereinander durch Verbindungsstangen (22, 24) verbunden sind, die im wesentlichen senkrecht zu den hinteren (Pvp) und vorderen (Pva) vertikalen mittleren Ebenen sind.

10. Gestell zum Tragen von Behältern nach Anspruch 7, **dadurch gekennzeichnet, daß** das zweite Ende der Achsen (70) der Rollelemente (68) außerdem Fixierungsmittel bildet, die geeignet sind, um die oberen Befestigungspunkte (48, 54) einer modularen Struktur (10b) und die unteren Befestigungspunkte (32, 38) einer modularen Struktur (10a) zu verbinden, die sie überragt.

11. Gestell zum Tragen von Behältern nach Anspruch 8, **dadurch gekennzeichnet, daß** die freien Enden der Ringe obere Befestigungspunkte (40, 42, 44, 46) der modularen Struktur (10a) bilden, wodurch die modulare Struktur (10a) einen Zwischenraumteil in ihrem oberen Teil aufweist, der geeignet ist, wenigstens zwischen den freien Enden überquert zu werden.

12. Gestell zum Tragen von Behältern nach Anspruch 9, **dadurch gekennzeichnet, daß** die Verbindungsstange (22, 24) mechanisch den oberen Teil jedes Bogens des hinteren Strukturelements (12) mit dem oberen Teil des Bogens des vorderen Strukturelements (14), die sich gegenüberstehen, verbindet.

13. Gestell zum Tragen von Behältern nach einem der Ansprüche 1 bis 12, **dadurch gekennzeichnet, daß** er außerdem untere Verbindungselemente (64) umfaßt, die geeignet sind, die beiden modularen anliegenden unteren Strukturen (10c, 10b) zu verbinden.

14. Gestell zum Tragen von Behältern nach einem der Ansprüche 1 bis 13, **dadurch gekennzeichnet, daß** es außerdem obere Verbindungselemente (86) umfaßt, die geeignet sind, die beiden angrenzenden modularen oberen Strukturen zu verbinden.

15. Gestell zum Tragen von Behältern nach Anspruch 2, **dadurch gekennzeichnet, daß** die Haltemittel aus Achsenteilen bestehen, wobei jedes untere Ende der Bögen der hinteren (12) und vorderen (14) Strukturelemente einen Achsenteil umfaßt.

## Claims

1. A rack for independently supporting cask-type containers presenting respective longitudinal axes, with said rack comprising:
- a plurality of modular structures (10) suitable for receiving several containers (88), each modular structure (10) presenting a back vertical mean plane (Pvp) that is substantially parallel to a front vertical mean plane (Pva), and comprising, so as to interconnect said modular structures, top fixing points (40, 42, 44, 46) and bottom fixing points (32, 34, 36, 38), and comprising, so as to support said containers, support means (68, 70, 72) situated close to said bottom fixing points (32, 34, 36, 38) in an upper row and to said top fixing points (40, 42, 44, 46) in a lower row,
said modular structures (10) being interconnected via their fixing points (32, 34, 36, 38, 48, 54, 56, 58) on a horizontal axis and on a vertical axis so that the front vertical mean planes (Pva) and the back vertical mean planes (Pvp) of said modular structures (10) coincide and so that every upper modular structure straddles two lower modular structures by being linked via its bottom fixing points (32, 34, 36, 38) to the top fixing points (40, 42, 44, 46) of the two contiguous bottom modular structures, said link creating the rack, thereby enabling said containers (88) to be placed in a staggered configuration in a vertical plane, thereby permitting free access to the top portion of said container (88),
the rack being **characterised in that** said modular structures (10) are suitable for receiving one by one said containers (88) and **in that** said support means (68, 70, 72) substantially lie in a horizontal plane so as to support a container (88) whose longitudinal axis is substantially perpendicular to said back and front vertical mean planes (Pvp, Pva).

2. A rack for supporting containers according to claim 1, **characterised in that** each modular structure (10) comprises:
- a back structure element (12) and a front structure element (14) facing each other, each structure element comprising two facing arcs (16, 18), the mean line of an arc being substantially vertical so that each arc presents a top end and a bottom end.

3. A rack for supporting containers according to claim 2, **characterised in that** said arcs (16, 18) are interconnected by a link arc (20) so that the concave sides of said two arcs (16, 18) and of the link arc (20) all face towards the inside of said structure, and so that each of said structure elements (12, 14) is substantially in the form of a portion of a circle whose diameter is greater than the maximum diameter of the cask.

4. A rack for supporting containers according to claim 2 or claim 3, **characterised in that** each modular structure (10) comprises:
- link rods (22, 24) suitable for interconnecting said back and front structure elements (12, 14);

5. A rack for supporting containers according to any one of claims 2 to 4, **characterised in that** said top and bottom ends of said two arcs of said back and front structure elements (12, 14) respectively contained in said back and front vertical mean planes (Pvp, Pva), respectively constitute said top fixing points (40, 42, 44, 46) and said bottom fixing points (32, 34, 36, 38) of said modular structure.

6. A rack for supporting containers according to any one of claims 1 to 5, **characterised in that** said support means (68, 70, 72) are constituted by rolling members (68), each rolling member (68) being free to rotate about the first end of a shaft (70).

7. A rack for supporting containers according to claim 6, **characterised in that** every arc of said back and front structure elements (12, 14) has an end that includes a rolling member (68) connected to said arc end by the second end of the shaft (70) of said support means (68, 70, 72).

8. A rack for supporting containers according to claim 3, **characterised in that** each back or front structure element (12, 14) forms a single piece, said two facing arcs (16, 18) and said link arc (20) being constituted by a single hoop portion presenting two free ends separated by a gap.

9. A rack for supporting containers according to any one of claims 2 to 5 and 8, **characterised in that** the back structure element (12) and the facing front structure element (14) are mechanically interconnected by link rods (22, 24) that are substantially perpendicular to said back and front vertical mean planes (Pvp, Pva).

10. A rack for supporting containers according to claim 7, **characterised in that** said second ends of the shafts (70) of said rolling members (68) also form fixing means suitable for connecting the top fixing points (48, 54) of a modular structure (10b) to the bottom fixing points (32, 38) of a modular structure (10a) above it.

11. A rack for supporting containers according to claim 8, **characterised in that** said free ends of said hoops constitute the top fixing points (40, 42, 44, 46) of the modular structure (10a) enabling said modular structure (10a) to present a space in its top portion suitable for being penetrated, at least between said free ends.

12. A rack for supporting containers according to claim 9, **characterised in that** the link rod (22, 24) mechanically connects the top portion of each arc of a back structure element (12) to the top portion of the arc of the facing front structure element (14).

13. A rack for supporting containers according to any one of claims 1 to 12, **characterised in that** it further comprises bottom link members (64) suitable for interconnecting two contiguous bottom modular structures (10c, 10b).

14. A rack for supporting containers according to any one of claims 1 to 13, **characterised in that** it further comprises top link members (86) suitable for interconnecting two contiguous top modular structures.

15. A rack for supporting containers according to claim 2, **characterised in that** said support means are constituted by shaft portions, each bottom end of an arc of said back and front structure elements (12, 14) including a shaft portion.
